# EUROPÄISCHE PATENTSCHRIFT

(11) **EP 0 693 997 B1**
(45) Veröffentlichungstag und Bekanntmachung des Hinweises auf die Patenterteilung: **20.11.1996**
(21) Anmeldenummer: 94914391.1
(22) Anmeldetag: 18.04.1994
(51) Int. Cl.: B60K 41/26, F16H 61/46, B60T 1/08

(54) **DOPPELT WIRKENDES BREMSVENTIL**
DOUBLE ACTION BRAKE VALVE
SOUPAPE DE FREIN A DOUBLE ACTION

(30) Priorität: 20.04.1993 DE 4312716
(43) Veröffentlichungstag der Anmeldung: 31.01.1996
(73) Patentinhaber: ZF FRIEDRICHSHAFEN Aktiengesellschaft, 88038 Friedrichshafen (DE)
(72) Erfinder: LEGNER, Jürgen, D-88048 Friedrichshafen (DE)
(86) Internationale Anmeldenummer: EP9401187
(87) Internationale Veröffentlichungsnummer: WO9423964

(56) Entgegenhaltungen:
- EP-A- 0 437 719
- EP-A- 0 530 842
- WO-A-84/01419
- WO-A-91/05966
- DE-A- 3 118 516
- US-A- 3 463 034

## Beschreibung

Die Erfindung bezieht sich auf ein doppelt wirkendes Bremsventil, das über Hydraulikleitungen mit einer hydrostatisch-mechanischen Getriebeeinheit verbunden ist. Die hydrostatisch-mechanische Getriebeeinheit besteht vorzugsweise aus einem verstellbaren Hydraulikmotor und einem nachgeschalteten mechanischen Schaltgetriebe, insbesondere einem Zwei-Gang-Getriebe. Das Bremsventil wird im Fahrbetrieb durch den Druck in einer der Anschlußleitungen offengehalten und im Bremsbetrieb erfolgt ein gedrosselter Ablauf der Hydraulikflüssigkeit über jeweils eine Drossel oder jeweils ein Druckbegrenzungsventil bei kurzgeschlossenen Hydraulikleitungen.

Aus der EP-B-0 428 581 (Anmeldung WO-A-90/01429) ist ein gattungsbildender hydrostatischer Antrieb für Fahrzeuge bekannt geworden. Bei diesem Fahrzeug ist der Hydraulikmotor in der Nabe eines Antriebsrades angeordnet. Es sind Fahrbremsventile vorgesehen, die in Druckleitungen angeordnet sind und in Abhängigkeit vom Betriebsdruck des Hydromotors den Rückflußquerschnitt auf- bzw. zusteuern.

Bei den bekannten doppelt wirkenden Bremsventilen ist nachteilig, daß das Bremsvermögen des Hydraulikmotors beim Ausrollen nicht auf den Übersetzungssprung zwischen den Gangstufen eines nachgeschalteten Schaltgetriebes abgestimmt werden kann. Somit ist die Verzögerung gangabhängig. Eine große Verzögerung, insbesondere im ersten Gang, wird vom Fahrer als sehr unangenehm empfunden.

Der vorliegenden Erfindung liegt die Aufgabe zugrunde, ein Bremsventil zu schaffen, mit dem, je nachdem, welcher Gang eines nachgeschalteten Schaltgetriebes geschaltet ist, unterschiedliche Verzögerungen erzielbar sind.

Die gestellte Aufgabe wird dadurch gelöst, daß die Druckbegrenzungsventile als zweistufige Ventile ausgebildet sind, die durch den Druck in den Hydraulikleitungen und einen Pilotdruck gangabhängig geschaltet werden. Durch die beiden Druckstufen und die Höhe des herrschenden Pilotdruckes kann das Bremsvermögen des Hydraulikmotors auf den Übersetzungssprung zwischen den Gangstufen zwei und eins eines nachgeschalteten Getriebes beliebig abgestimmt werden. Gefährliche oder zumindest unangenehme Fahrsituationen werden dadurch mit Sicherheit ausgeschaltet.

Einen einfachen hydraulischen Aufbau erhält man, wenn die Hydraulikleitungen über jeweils ein Druckbegrenzungsventil und je eine Verbindungsleitung miteinander verbindbar sind.

Um einen Pilotdruck gangabhängig den Druckbegrenzungsventilen aufzuschalten, ist es vorteilhaft, eine Druckleitung über ein Wegeventil und eine Anschlußleitung zu den Druckbegrenzungsventilen zu führen. Die Druckleitung ist hierbei mit der Druckleitung des Getriebes zum Schalten eines bestimmten Ganges, insbesondere des ersten Ganges, verbunden.

Über das Wegeventil besteht eine Verbindung zu den Druckbegrenzungsventilen ausschließlich im Bremsbetrieb und in Verbindung mit dem geschalteten ersten Gang des Schaltgetriebes.

Weitere vorteilhafte Merkmale sind den Unteransprüchen 5 bis 8 zu entnehmen.

Weitere, für die Erfindung wesentliche Merkmale sowie die daraus resultierenden Vorteile sind der nachfolgenden Beschreibung eines Ausführungsbeispiels der Erfindung zu entnehmen.
Es zeigen:
- Fig. 1: ein Hydraulikschema mit einem doppelt wirkenden Bremsventil nach dem Stand der Technik und
- Fig. 2: ein Hydraulikschema nach der Erfindung mit zweistufigen, doppelt wirkenden Bremsventilen.

Der Verständlichkeit wegen wird im folgenden die Verwendung eines doppelt wirkenden Fahrbremsventils 1 innerhalb eines Hydraulikschemas nach dem Stand der Technik erläutert. An das Gehäuse (mit strichpunktierten Linien dargestellt) sind zwei Hydraulikleitungen 2 und 3 herangeführt. Die Hydraulikleitungen 2 und 3 verbinden ein selbst nicht dargestelltes Wegeventil mit dem Bremsventil 1. Je nach Schaltstellung dieses Wegeventils ist entweder die Hydraulikleitung 2 oder die Hydraulikleitung 3 der Zulauf für Hydraulikflüssigkeit oder die Hydraulikflüssigkeit läuft über eine dieser Hydraulikleitungen 2 oder 3, vom Bremsventil 1 kommend, zurück.

Vom Bremsventil 1 führen zwei Hydraulikleitungen 4 und 5 zu einem verstellbaren Hydraulikmotor 6. Der Hydraulikmotor 6 ist mit einem mechanischen Schaltgetriebe 7 verbunden. Im vorliegenden Fall, es handelt sich um den Antrieb eines Baggers, ist das Schaltgetriebe 7 als Zwei-Gang-Getriebe ausgebildet. Der Hydraulikmotor 6 und das Schaltgetriebe 7 bilden eine hydrostatisch-mechanische Getriebeeinheit.

Eine dritte Hydraulikleitung 8 führt vom Bremsventil 1 zu einer Verstelleinheit 9 für den Hydraulikmotor 6.

Im Fahrbetrieb wird ein Bremskolben 10 durch den Druck in einer der Hydraulikleitungen 2 oder 3 geöffnet, so daß die Hydraulikflüssigkeit im freien Durchfluß von der Hydraulikleitung 2 in die Hydraulikleitung 4 bzw. von der Hydraulikleitung 3 in die Hydraulikleitung 5 und somit zum Hydraulikmotor 6 fließen kann.

Im Bremsbetrieb wird der Bremskolben 10 wegen des fehlenden Zulaufdruckes in einer der Hydraulikleitungen 2 oder 3 in die gezeichnete Mittelstellung überführt. Der Hydraulikmotor 6 wird wegen der trägen Fahrzeugmasse zur Pumpe. Der Hydraulikmotor 6 fördert dann Hydraulikflüssigkeit entweder über die Hydraulikleitung 4 oder die Hydraulikleitung 5 zum Bremskolben 10. Der Ablauf der Hydraulikflüssigkeit aus der Hydraulikleitung 4 in die Hydraulikleitung 2 bzw. aus der Hydraulikleitung 5 in die Hydraulikleitung 3 erfolgt über eine Drosselstelle 11 oder 12, die zu Rückschlagventilen parallel geschaltet liegen. Je nachdem, wie groß der Rückstrom der Hydraulikflüssigkeit in der Leitung 4 oder 5 ist, stellt sich ein mehr oder weniger großer Druck in einer dieser Leitungen ein.

Die Hydraulikleitungen 4 und 5 können über eine Verbindungsleitung 13 kurzgeschlossen werden. In dieser Verbindungsleitung 13 liegen zwei baugleiche Druckbegrenzungsventile 14. Wenn sich in der Hydraulikleitung 4 bzw. in der Hydraulikleitung 5 ein Druck einstellt, der dem Öffnungsdruck der Druckbegrenzungsventile 14 gleich ist, so öffnet das jeweils angesteuerte Druckbegrenzungsventil 14 die Verbindung zwischen den Hydraulikleitungen 4 und 5 bzw. 5 und 4.

Allgemein gilt, daß sich das Bremsmoment des Hydraulikmotors aus dem Schluckvolumen und dem in der Hydraulikleitung 4 oder 5 herrschenden Druck (Bremsdruck) ergibt.

Ist an den Hydromotor 6, wie im vorliegenden Fall, ein Schaltgetriebe 7 angebaut, so stellen sich im Bremszustand verschieden große Bremsmomente am Getriebeabtrieb ein. Die unterschiedlich großen Bremsmomente sind vom Übersetzungssprung der jeweilig geschalteten Gänge abhängig. Hieraus folgt, daß das Fahrzeug im zweiten Gang gering verzögert wird. Im ersten Gang ist jedoch die Verzögerung um den Faktor des Übersetzungssprunges größer. Dies kann zu gefährlichen Fahrzuständen führen. Das Fahrzeug kann beispielsweise wegen durchrutschender Räder unbeherrschbar werden. Zumindest werden die Verzögerungen im ersten Gang vom Fahrer als sehr unangenehm empfunden. Mit der erfindungsgemäßen Lösung wird dieser Nachteil behoben.

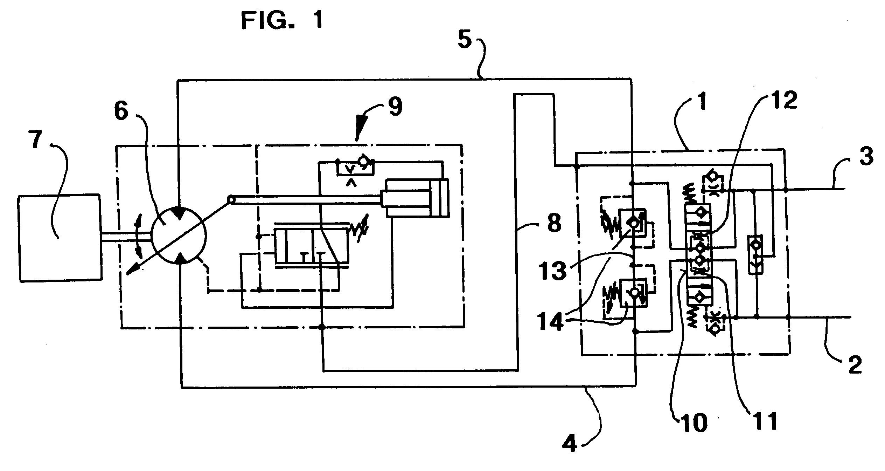

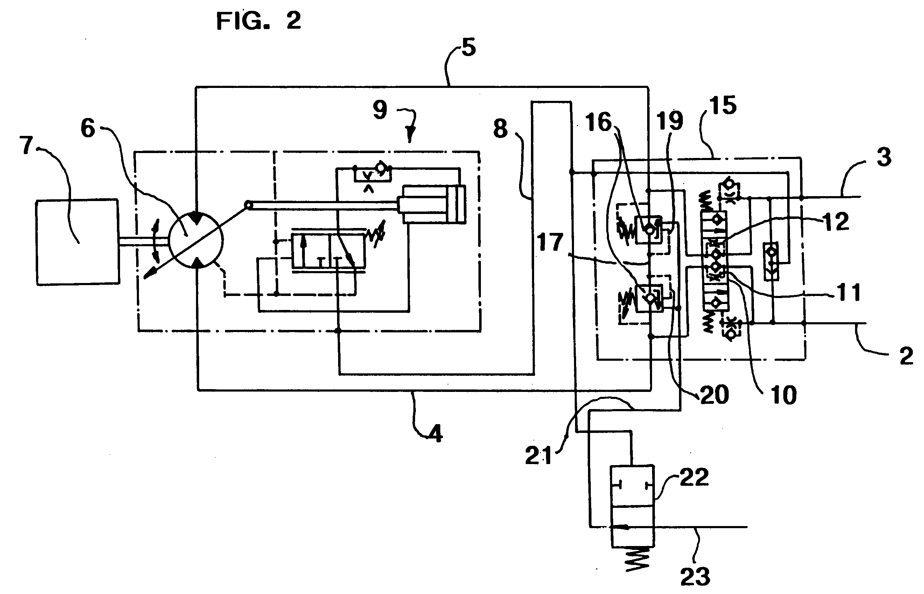

Die Fig. 2 zeigt ein Hydraulikschema mit einem zweistufigen, doppelt wirkenden Bremsventil 15. Im Hydraulikschema nach Fig. 2 sind gleiche Bauteile mit den gleichen Bezugsziffern wie im Hydraulikschema nach Fig. 1 gekennzeichnet. Das zweistufige, doppelt wirkende Bremsventil 15 zeichnet sich insbesondere dadurch aus, daß Druckbegrenzungsventile 16 eingesetzt werden, die zweistufig arbeiten. Die Hydraulikleitungen 4 und 5 sind an jeweils ein Druckbegrenzungsventil 16 angeschlossen. Ebenso ist die Hydraulikleitung 4 und die Hydraulikleitung 5 mit dem Bremskolben 10 verbunden. Die Hydraulikleitungen 4 und 5 können über eine Verbindungsleitung 17 kurzgeschlossen werden. In dieser Verbindungsleitung 17 liegen zwei baugleiche Druckbegrenzungsventile 16.

An die Druckbegrenzungsventile 16 führt eine Anschlußleitung 21, die von einem 3/2-Wegeventil 22 abzweigt. Zu diesem 3/2-Wegeventil führt eine Druckleitung 23. Diese Druckleitung 23 ist mit der Druckleitung des Schaltgetriebes 7 zur Schaltung des ersten Ganges verbunden. Das Wegeventil 22 gibt die Verbindung von der Druckleitung 23 zur Anschlußleitung 21 nur dann frei, wenn kein Druck in der Hydraulikleitung 8 herrscht. In diesem Fall ist die Druckleitung 21 über das 3/2-Wegeventil mit dem Tank verbunden und somit drucklos.

Die Funktion des zweistufigen, doppelt wirkenden Bremsventils 15 ist wie folgt:

Beim Bremsbetrieb werden die Druckbegrenzungsventile durch den in der Hydraulikleitung 4 bzw. in der Hydraulikleitung 5 herrschenden Druck angesteuert. Demnach ist eine erste Druckstufe wirksam, die einem ersten Öffnungsdruck der Druckbegrenzungsventile 16 entsprechen. Eine zweite Druckstufe ist dann wirksam, wenn durch den in der Anschlußleitung 21 herrschenden Pilotdruck die zweite Stufe der Druckbegrenzungsventile 16 geschaltet wird. Zu beachten ist, daß die zweite Druckstufe unterhalb des Druckniveaus der ersten Druckstufe liegt. Die Differenz der beiden Druckstufen ergibt sich aus den geometrischen Verhältnissen innerhalb der Druckbegrenzungsventile und aus der Höhe des Pilotdrucks, der an den Druckbegrenzungsventilen 16 anliegt. Durch die beiden Druckstufen und die Höhe des herrschenden Pilotdruckes kann das Bremsvermögen des Hydraulikmotors auf den Übersetzungssprung zwischen den Gangstufen 2 und 1 des nachgeschalteten Schaltgetriebes 7 beliebig abgestimmt werden. Das 3/2-Wegeventil 22 sorgt dafür, daß die zweite Druckstufe der Druckbegrenzungsventile 16 ausschließlich im Bremsbetrieb, d. h. Ausrollen des Fahrzeuges, in Verbindung mit dem geschalteten ersten Gang des Schaltgetriebes wirksam ist. Dies hat zudem den Vorteil, daß im Zugbetrieb für beide Gänge des Schaltgetriebes 7 das gleiche Drehmoment des Hydraulikmotors zur Verfügung steht (entsprechend dem jeweils in der Hydraulikleitung 4 bzw. 5 herrschenden Druck).

### Bezugszeichen

- 1: Bremsventil
- 2: Hydraulikleitung
- 3: Hydraulikleitung
- 4: Hydraulikleitung
- 5: Hydraulikleitung
- 6: Hydraulikmotor
- 7: Schaltgetriebe
- 8: Hydraulikleitung
- 9: Verstelleinheit
- 10: Bremskolben
- 11: Drossel
- 12: Drossel
- 13: Verbindungsleitung
- 14: Druckbegrenzungsventile
- 15: Bremsventil
- 16: Druckbegrenzungsventile
- 17: Verbindungsleitung
- 18: -
- 19: Steuerleitung
- 20: Steuerleitung
- 21: Anschlußleitung
- 22: Wegeventil
- 23: Druckleitung

## Patentansprüche

1. Doppelt wirkendes Bremsventil (10), das über Hydraulikleitungen (4, 5) mit einer hydrostatisch-mechanischen Getriebeeinheit, insbesondere einem verstellbaren Hydraulikmotor (6), und einem mechanischen Schaltgetriebe (7) verbunden ist und im Fahrbetrieb durch den Druck in einer der Anschlußleitungen (2, 3) offen gehalten und im Bremsbetrieb einen gedrosselten Ablauf der Hydraulikflüssigkeit über jeweils eine Drossel (11, 12) oder jeweils ein Druckbegrenzungsventil (16) bei kurzgeschlossenen Hydraulikleitungen (4, 5) zuläßt, dadurch **gekennzeichnet,** daß die Druckbegrenzungsventile (16) als zweistufige Ventile ausgebildet sind, die durch den Druck in den Hydraulikleitungen (4, 5) und einen Pilotdruck (Druck in Anschlußleitung 21) gangabhängig geschaltet werden.

2. Bremsventil nach Anspruch 1, dadurch **gekennzeichnet,** daß die Hydraulikleitungen (4, 5) über jeweils ein Druckbegrenzungsventil (16) und eine Verbindungsleitung (17) miteinander verbindbar sind.

3. Bremsventil nach den Ansprüchen 1 und 2, dadurch **gekennzeichnet,** daß eine Druckleitung (23) über ein Wegeventil (22) und eine Anschlußleitung (21) zu den Druckbegrenzungsventilen (16) führt.

4. Bremsventil nach den Ansprüchen 1 bis 3, dadurch **gekennzeichnet,** daß über das Wegeventil (22) eine Verbindung zu den Druckbegrenzungsventilen (16) ausschließlich im Bremsbetrieb und in Verbindung mit dem geschalteten ersten Gang des Schaltgetriebes (7) besteht.

5. Bremsventil nach den Ansprüchen 1 bis 4, dadurch **gekennzeichnet,** daß eine erste Druckstufe der Druckbegrenzungsventile (16) einem in den Hydraulikleitungen (4, 5) herrschenden Öffnungsdruck entspricht und daß eine zweite Druckstufe der Druckbegrenzungsventile (16) durch den in der Anschlußleitung (21) herrschenden Pilotdruck vorgegeben ist.

6. Bremsventil nach Anspruch 5, dadurch **gekennzeichnet,** daß die zweite Druckstufe unterhalb des Druckniveaus der ersten Druckstufe liegt.

7. Bremsventil nach den Ansprüche 1, 5 und 7, dadurch **gekennzeichnet,** daß sich die Differenz der beiden Druckstufen aus den geometrischen Verhältnissen innerhalb der Druckbegrenzungsventile (16) und aus der Höhe des Pilotdrucks ergibt.

8. Bremsventil nach Anspruch 7, dadurch **gekennzeichnet,** daß das Bremsvermögen des Hydraulikmotors (6) auf den Übersetzungssprung zwischen den Gangstufen zwei und eins des nachgeschalteten Schaltgetriebes (7) durch die beiden Druckstufen und die Höhe des herrschenden Pilotdruckes abgestimmt werden kann.

## Claims

1. Double-acting brake valve (10), which is connected via hydraulic lines (4, 5) to a hydrostatic-mechanical transmission, in particular an adjustable hydraulic motor (6), and a mechanical gear-shift system (7), in driving mode is held open by the pressure in one of the connecting lines (2, 3) and in braking mode permits a throttled discharge of the hydraulic fluid via a respective throttle (11, 12) or a respective pressure relief valve (16) when the hydraulic lines (4, 5) are short-circuited, characterised in that the pressure relief valves (16) are formed as two-stage valves which are switched in accordance with the gear by the pressure in the hydraulic lines (4, 5) and a pilot pressure (pressure in the connecting line 21).

2. Brake valve according to claim 1, characterised in that the hydraulic lines (4, 5) can be connected together via a respective pressure relief valve (16) and a connecting line (17).

3. Brake valve according to claims 1 and 2, characterised in that a pressure line (23) leads via a directional control valve (22) and a connecting line (21) to the pressure relief valves (16).

4. Brake valve according to claims 1 to 3, characterised in that there is only a connection via the directional control valve (22) to the pressure relief valves (16) in braking mode and in conjunction with the engaged first gear of the gear-shift system (7).

5. Brake valve according to claims 1 to 4, characterised in that a first pressure stage of the pressure relief valves (16) corresponds to an opening pressure in the hydraulic lines (4, 5), and that a second pressure stage of the pressure relief valves (16) is predetermined by the pilot pressure in the connecting line (21).

6. Brake valve according to claim 5, characterised in that the second pressure stage lies below the pressure level of the first pressure stage.

7. Brake valve according to claims 1, 5 and 7, characterised in that the difference in the two pressure stages results from the geometric ratios within the pressure relief valves (16) and from the level of the pilot pressure.

8. Brake valve according to claim 7, characterised in that the braking power of the hydraulic motor (6) can be adapted to the transmission jump between the second and first gear stages of the downstream gear-shift system (7) through the two pressure stages and the level of the prevailing pilot pressure.

## Revendications

1. Valve de freinage (10) à double effet reliée par des conduits hydrauliques (4, 5) à une transmission mécano-hydrostatique, notamment à un moteur hydraulique réglable (6) et à une boîte de vitesses mécanique (7), maintenue ouverte lors du fonctionnement par la pression de l'un des conduits de raccordement (2, 3) et laissant passer lors du freinage une faible quantité de fluide hydraulique, soit par un clapet (11, 12), soit par un limiteur de débit (16) avec les conduits hydrauliques (4, 5) court-circuités, **caractérisée** en ce que les limiteurs de débit (16) sont des valves à deux étages, actionnées par la pression dans les conduites hydrauliques (4, 5) et une pression pilote (pression dans le conduit de raccordement 21) en fonction de la vitesse enclenchée.

2. Valve de freinage selon la revendication 1, **caractérisée** en ce que les conduits hydrauliques (4, 5) peuvent être reliés les uns aux autres par un limiteur de pression (16) et un conduit de raccordement (17).

3. Valve de freinage selon les revendications 1 et 2, **caractérisée** en ce qu'un conduit de pression (23) mène aux limiteurs de débit par un distributeur (22) et un conduit de raccordement (21).

4. Valve de freinage selon les revendications 1, 2 et 3, **caractérisée** en ce que le distributeur n'est relié aux limiteurs de débit (16) que lors du freinage et que lorsque la première vitesse de la boîte mécanique (7) est enclenchée.

5. Valve de freinage selon les revendications 1 à 4, **caractérisée** en ce qu'un premier étage de pression des limiteurs de débit (16) correspond à une pression d'ouverture dans les conduits hydrauliques (4, 5) et qu'un deuxième étage des limiteurs de débit (16) est déterminé par une pression pilote dans le conduit de raccordement (21).

6. Valve de freinage selon la revendication 5, **caractérisée** en ce que le deuxième étage de pression est inférieur à la pression du premier étage de pression.

7. Valve de freinage selon les revendications 1, 5 et 7, **caractérisée** en ce que la différence entre les deux étages de pression est donnée par les rapports géométriques à l'intérieur des limiteurs de débit (16) et par la valeur de la pression pilote.

8. Valve de freinage selon la revendication 7, **caractérisée** en ce que la puissance de freinage du moteur hydraulique (6) peut être réglée, par les deux étages de pression et la valeur de la pression pilote, sur le saut de démultiplication entre la deuxième et la première vitesse de la boîte mécanique montée en aval (7).
